# FASCICULE DE BREVET EUROPEEN

(11) **EP 3 359 834 B1**
(45) Date de publication et mention de la délivrance du brevet: **13.11.2019**
(21) Numéro de dépôt: 16777703.6
(22) Date de dépôt: 06.10.2016
(51) Int. Cl.: F16D 13/71, F16D 3/79

(54) **DISPOSITIF D'EMBRAYAGE POUR UN VEHICULE AUTOMOBILE**
KUPPLUNGSVORRICHTUNG FÜR EIN KRAFTFAHRZEUG
CLUTCH DEVICE FOR A MOTOR VEHICLE

(30) Priorité: 09.10.2015 FR 1559623
(43) Date de publication de la demande: 15.08.2018
(73) Titulaire: Valeo Embrayages, 80009 Amiens Cedex 2 (FR)
(72) Inventeur: LEBAS, Gilles, 80009 Amiens (FR); LAFORGE, Thibault, 80009 Amiens (FR)
(86) Numéro de dépôt international: PCT/EP2016/073924
(87) Numéro de publication internationale: WO 2017/060382

(56) Documents cités:
- WO-A1-2015/149804
- DE-A1-102008 004 150
- DE-A1-102014 221 302
- FR-A1- 2 915 253
- FR-A1- 3 007 477

## Description

La présente invention concerne un dispositif d'embrayage pour un véhicule automobile.

Un dispositif d'embrayage comporte classiquement un plateau de réaction destiné à être couplé en rotation à un vilebrequin d'un moteur du véhicule, un disque de friction destiné à être couplé à un arbre d'entrée d'une boîte de vitesses, et un plateau de pression. Le mouvement du plateau de pression est commandé par un diaphragme, lui-même commandé par une butée d'embrayage.

Le plateau de pression est ainsi mobile entre une position d'embrayage dans laquelle le disque de friction est serré entre lesdits plateaux de pression et de réaction, et une position de débrayage dans laquelle le disque de friction est libéré.

Des moyens d'amortissement sont généralement montés entre le disque de friction et l'arbre d'entrée de la boîte de vitesses, les moyens d'amortissement agissant à l'encontre de la rotation du disque de friction par rapport à l'arbre d'entrée de la boîte de vitesses.

En fonctionnement, la butée d'embrayage exerce un effort axial sur le diaphragme, cet effort étant généralement transmis au vilebrequin par l'intermédiaire notamment du plateau de pression, du disque de friction et du plateau de réaction. Un tel dispositif d'embrayage est divulgué par le document FR3007477A1.

Il a été constaté que les efforts axiaux transmis au vilebrequin peuvent endommager le moteur du véhicule, en particulier les paliers supportant le vilebrequin. Ces paliers ne sont en effet pas conçus pour tolérer des charges axiales importantes, sur de longues périodes de temps.

De tels efforts axiaux sont en particuliers transmis lorsque le diaphragme est actionné, soit pour fermer l'embrayage dans le cas d'un embrayage normalement ouvert, soit pour ouvrir l'embrayage dans le cas d'un embrayage normalement fermé.

De tels efforts peuvent également être générés par des déplacements axiaux en fonctionnement. De tels déplacements sont par exemple dus à des accélérations axiales, à des changements de sens des efforts au sein de la boîte de vitesses, ou encore à des vibrations du moteur.

Dans le cas d'un véhicule à motorisation hybride, on utilise une source d'énergie thermique avec une source d'énergie électrique. On parle de véhicule hybride rechargeable lorsqu'un véhicule hybride, combinant ces deux énergies, peut se recharger sur un réseau électrique, ce qui permet de disposer d'une autonomie plus importante par comparaison avec un véhicule hybride classique. Un véhicule hybride rechargeable peut être de type PHEV (acronyme de Plug-in-Hybrid Electric Vehicle, en anglais). Dans cette configuration, la motorisation électrique et la motorisation thermique agissent de concert pour animer le véhicule. L'usage du mode électrique dépend de la configuration du véhicule. Pour un tel véhicule, l'usage du mode électrique est plus fréquent que l'usage du mode thermique. En conséquence, l'embrayage reliant le moteur thermique à la boîte de vitesses est, en majorité, en position débrayée ou ouverte. Dans un tel cas, on utilisera de préférence un embrayage de type normalement ouvert, de façon à ce que le diaphragme soit actionné uniquement pour fermer l'embrayage, c'est-à-dire pour embrayer.

L'invention a notamment pour but de proposer un dispositif d'embrayage pouvant être utilisé sur un véhicule hybride du type précité, tout en évitant la dégradation des paliers du moteur thermique du véhicule. Un tel dispositif d'embrayage doit également pouvoir être monté ou démonté aisément et tolérer d'éventuels défauts de positionnement axiaux entre le vilebrequin et la boîte de vitesses.

A cet effet, elle propose un dispositif d'embrayage pour un véhicule automobile, comportant un plateau de réaction destiné à être couplé en rotation à un vilebrequin, un disque de friction destiné à être couplé à un arbre d'entrée d'une boîte de vitesses, un plateau de pression actionné par un diaphragme, de façon à serrer ou libérer le disque de friction sur le plateau de réaction, des moyens d'amortissement montés entre le disque de friction et l'arbre d'entrée de la boîte de vitesses, les moyens d'amortissement agissant à l'encontre de la rotation du disque de friction par rapport à l'arbre d'entrée de la boîte de vitesses, caractérisé en ce qu'il comporte des moyens de couplage en rotation, aptes à coupler en rotation le plateau de réaction ou une partie fixe par rapport au plateau de réaction, d'une part, et le vilebrequin, d'autre part, lesdits moyens de couplage en rotation étant élastiquement déformables suivant l'axe du dispositif d'embrayage, et en ce qu'il comporte un palier destiné à être monté entre le plateau de réaction ou la partie fixe par rapport audit plateau de réaction, d'une part, et l'arbre d'entrée de la boîte de vitesses, d'autre part, ledit palier étant apte à former un appui axial du plateau de réaction ou de la partie fixe par rapport audit plateau de réaction, d'une part, sur l'arbre d'entrée de la boîte de vitesses, d'autre part.

Les moyens de couplage permettent de coupler en rotation le plateau de réaction et le vilebrequin, tout en évitant de reprendre les efforts provenant du plateau de réaction et de transmettre ces efforts au vilebrequin. On évite ainsi d'endommager les paliers associés du moteur. Par ailleurs, de tels moyens de couplage permettent de compenser d'éventuels défauts de positionnement axiaux entre le vilebrequin et la boîte de vitesses, ou encore de compenser des tolérances dimensionnelles des différentes pièces, dans la direction axiale.

L'appui axial au travers du palier permet de reprendre les efforts exercés par la butée d'embrayage sur l'arbre d'entrée de la boîte de vitesses. L'appui sera bien évidemment orienté en conséquence. L'appui est par exemple orienté de façon à pouvoir transmettre à l'arbre d'entrée de la boîte de vitesses, des efforts orientés axialement du diaphragme vers le plateau de réaction, au travers du palier. On notera que les paliers supportant l'arbre d'entrée de la boîte de vitesses sont généralement dimensionnés de façon à pouvoir tolérer des efforts axiaux importants.

Les moyens de couplage en rotation comportent une tôle flexible apte à être déformée élastiquement dans la direction axiale.

Une tôle flexible peut être facilement assemblée ou démontée, de façon à pouvoir coupler ou démonter aisément le dispositif d'embrayage et le vilebrequin.

Le dispositif d'embrayage comporte un volant annulaire fixé au plateau de réaction, la tôle flexible étant fixée en périphérie radialement externe dudit volant, par exemple par l'intermédiaire de vis.

Un tel volant forme une masse d'inertie. Le volant peut présenter une forme générale de cloche.

Dans ce cas, la tôle flexible peut comporter une zone de fixation oblique par rapport à la direction radiale et par rapport à la direction axiale, fixée sur une zone de fixation de forme complémentaire du volant annulaire.

En d'autres termes, la zone de fixation forme un angle non nul avec la direction radiale et avec le plan radial, ce dernier étant perpendiculaire à la direction axiale. L'utilisation d'une zone de fixation oblique, en combinaison avec les moyens de couplage autorisant un débattement axial, permet de compenser aisément d'éventuels défauts de coaxialité ou de positionnement radiaux entre l'axe du vilebrequin et l'axe du dispositif d'embrayage.

Le palier est monté au niveau de l'extrémité radialement interne du volant.

La tôle flexible peut comporter une partie annulaire radialement interne, destinée à être fixée au vilebrequin, et au moins une patte s'étendant radialement vers l'extérieur depuis la partie annulaire interne, ladite patte étant déformable élastiquement dans la direction axiale, l'extrémité radialement externe de ladite patte étant fixée au plateau de réaction ou à la partie fixe par rapport au plateau de réaction, par exemple au volant annulaire.

Le nombre de pattes de la tôle flexible peut varier, et est par exemple égal à trois.

Le palier est par exemple un palier à roulement, tel par exemple qu'un roulement à billes, comportant une bague interne montée sur le plateau de pression ou sur l'élément fixe par rapport au plateau de pression, une bague externe destinée à être montée sur l'arbre d'entrée de la boîte de vitesses, et des moyens de roulements, tels par exemple que des billes, montées entre les bagues interne et externe.

Les moyens d'amortissement peuvent comporter au moins une rondelle de guidage couplée en rotation au disque de friction, un voile annulaire destiné à être couplé en rotation à l'arbre d'entrée de boîte la de vitesses, et au moins deux organes élastiques montés entre la rondelle de guidage et le voile annulaire et agissant à l'encontre de la rotation de la rondelle de guidage par rapport au voile annulaire, les organes élastiques étant agencés en série par l'intermédiaire d'un organe de phasage de façon à ce que les organes élastiques se déforment en phase les uns avec les autres.

De tels moyens d'amortissement présentent ainsi une structure de type LTD (acronyme de Long Travel Damper), permettant un débattement angulaire important entre le disque de friction et l'arbre d'entrée de la boîte de vitesses. Un débattement important permet d'obtenir une filtration efficace des vibrations et des acyclismes de rotation.

Les moyens d'amortissement peuvent comporter au moins un support disposé en amont, en aval ou entre les organes élastiques, au moins une masse pendulaire étant montée de façon mobile sur le support.

Dans un autre mode de réalisation, les moyens d'amortissement peuvent également comporter au moins un support lié en rotation au disque de friction, au moins une masse pendulaire étant montée de façon mobile sur le support.

Les masses pendulaires peuvent être montées de façon mobile sur le support par l'intermédiaire d'entretoises et de rouleaux par exemple, comme cela est connu en soi, ces masses étant destinées à améliorer la filtration des vibrations et des acyclismes de rotation.

Le dispositif d'embrayage peut comporter un couvercle fixé au plateau de réaction, ledit couvercle logeant, au moins en partie, le plateau de pression, le diaphragme et le disque de friction, le diaphragme étant monté basculant sur le couvercle.

L'invention concerne également un ensemble comportant un dispositif d'embrayage du type précité, et un arbre d'entrée d'une boîte de vitesses, la bague interne du palier à roulement étant immobilisée axialement dans les deux sens entre un épaulement formant un appui pour la bague interne dans un premier sens et un anneau élastique de type circlip formant un appui pour la bague interne dans un second sens, opposé au premier sens, l'anneau élastique étant monté dans une gorge de l'arbre d'entrée de la boîte de vitesses, la bague externe du palier à roulement prenant appui axialement dans au moins un sens sur le plateau de réaction ou sur la partie fixe par rapport au plateau de réaction, en particulier dans le sens correspondant à celui des efforts axiaux exercés par la butée d'embrayage sur le diaphragme, par exemple sur un épaulement du plateau de réaction ou de la partie fixe par rapport au plateau de réaction.

Afin de faciliter la mise en place de l'anneau élastique, celui-ci est placé à proximité de l'extrémité correspondante de l'arbre d'entrée de la boîte de vitesses.

Le procédé de montage du dispositif d'embrayage entre le vilebrequin et l'arbre d'entrée de la boîte de vitesses peut ainsi comporter les étapes suivantes :
- monter le sous-ensemble formé par le plateau de réaction, le plateau de pression, le disque de friction, le diaphragme, les moyens d'amortissement, le couvercle, le volant et/ou le palier, autour de l'arbre d'entrée de la boîte de vitesses, le palier étant monté entre le plateau de réaction ou la partie fixe par rapport audit plateau de réaction (par exemple le volant), d'une part, et l'arbre d'entrée de la boîte de vitesses, de façon à ce que la bague interne soit apte à prendre appui sur l'épaulement correspondant dudit arbre et que la bague externe soit apte à prendre appui sur l'épaulement correspondant du plateau de réaction ou de la partie fixe par rapport audit plateau de réaction (par exemple le volant),
- monter le circlip dans la gorge de l'arbre d'entrée de la boîte de vitesses, de façon à immobiliser axialement la bague interne par rapport audit arbre,
- fixer la tôle élastique au vilebrequin, d'une part, et au plateau de réaction ou à la partie fixe par rapport audit plateau de réaction (par exemple le volant), d'autre part.

Bien entendu, l'invention n'est pas limitée aux véhicules à motorisation hybride, ni aux embrayages de type normalement ouvert.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en coupe axiale d'un ensemble comportant un dispositif d'embrayage monté entre un vilebrequin et un arbre d'entrée d'une boîte de vitesses, selon une forme de réalisation de l'invention,
- les figures 2 et 3 sont des vues en perspective dudit ensemble,
- la figure 4 est une vue de face dudit ensemble,
- la figure 5 est une vue éclatée, en perspective, d'une partie du dispositif d'embrayage,
- la figure 6 est une vue éclatée, en perspective, d'une partie du dispositif d'embrayage,
- la figure 7 est une vue en perspective de la tôle élastique servant à coupler le vilebrequin et le volant.

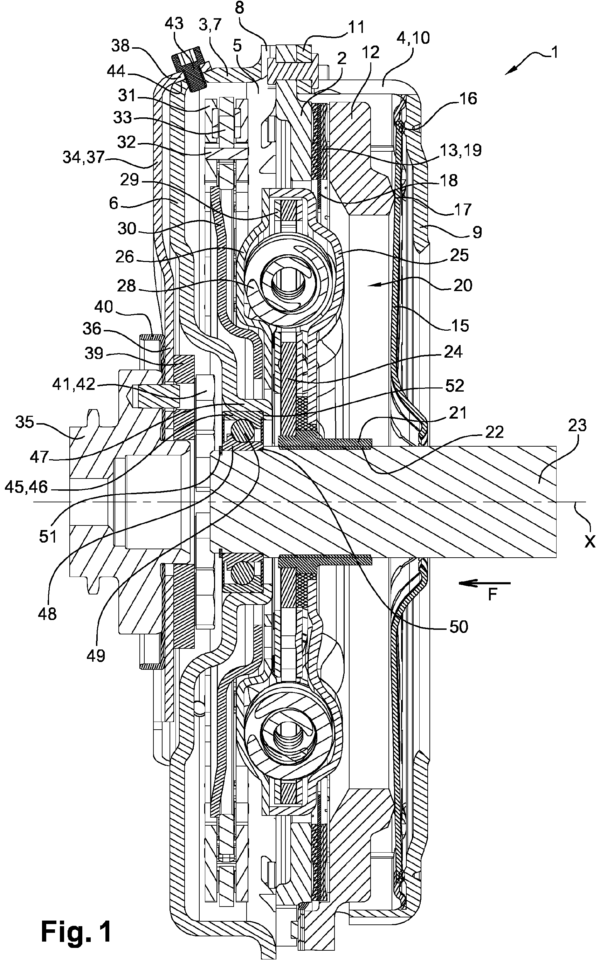

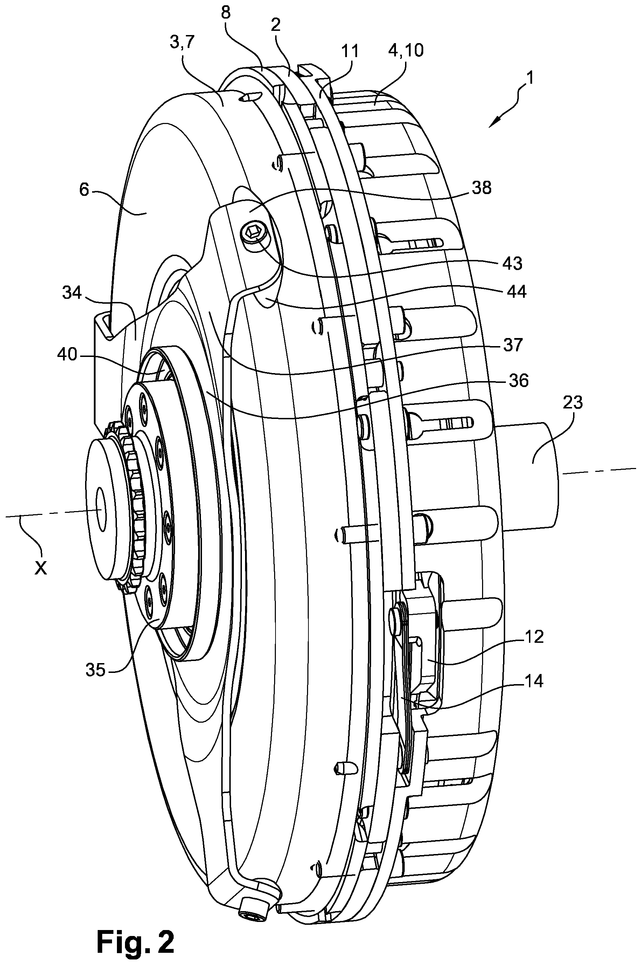

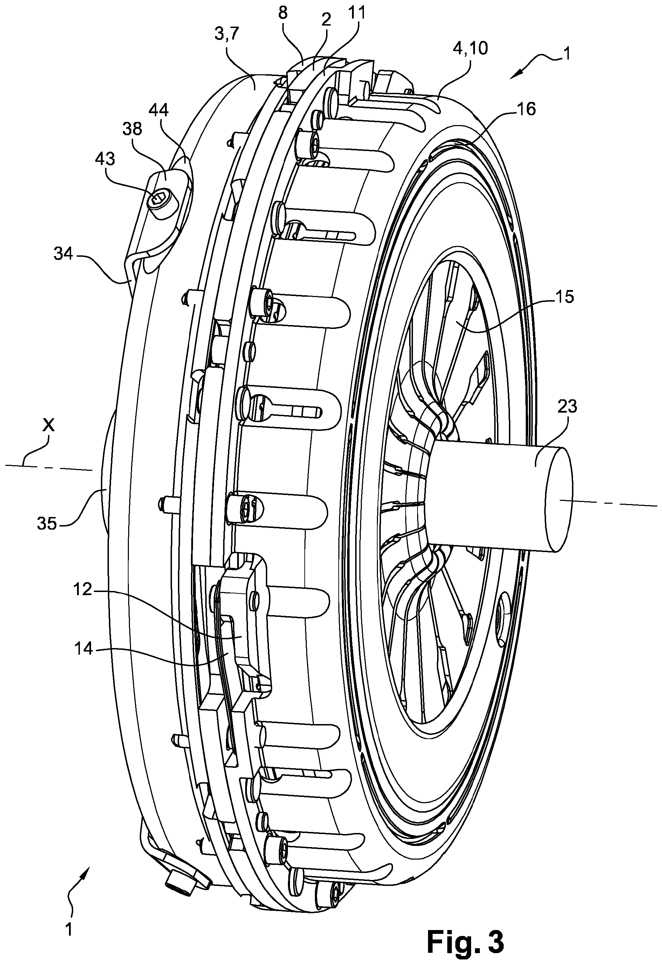

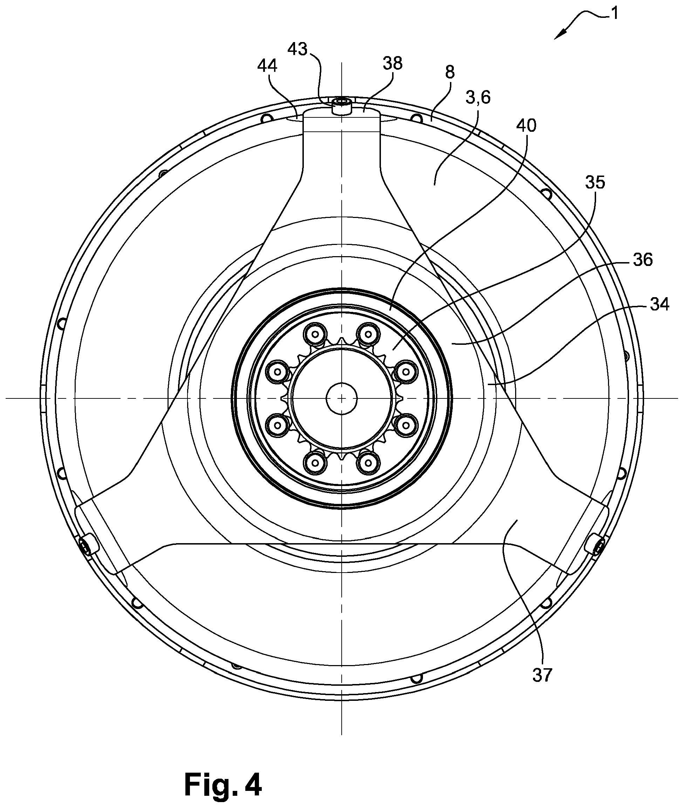

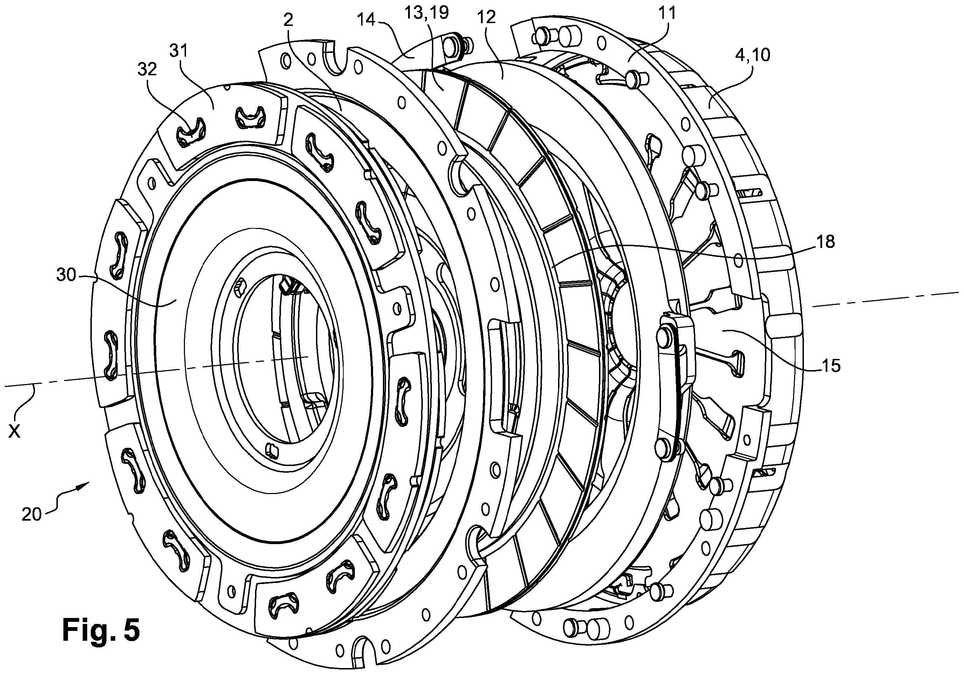

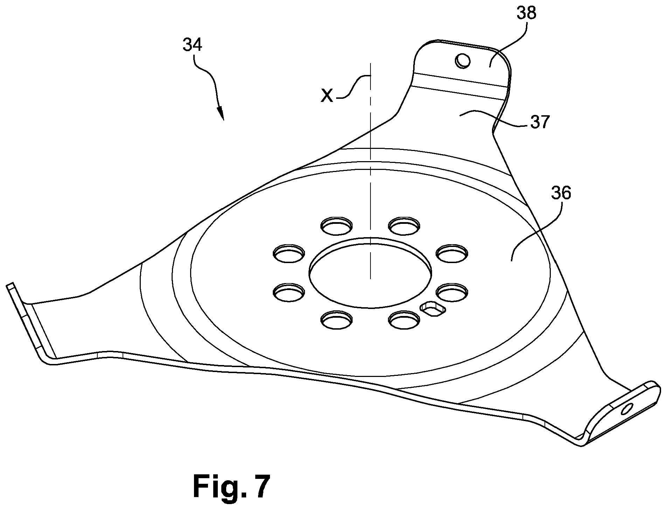

Un dispositif d'embrayage 1 pour un véhicule automobile selon une forme de réalisation de l'invention est représenté aux figures 1 à 7. Celui-ci comporte un plateau de réaction annulaire 2 d'axe X, dont la périphérie radialement externe est reliée, à l'arrière, à la périphérie radialement externe d'un volant annulaire 3 en forme de cloche, et à l'avant, à la périphérie radialement externe d'un couvercle 4 en forme de cloche. Le volant 3 et le couvercle 4 délimitent un volume interne 5.

Le volant 3 comporte une partie arrière 6 s'étendant radialement et une partie cylindrique 7 s'étendant vers l'avant, située en périphérie radialement externe. L'extrémité avant de la partie cylindrique 7 comporte des brides 8 ou des pattes radiales qui sont fixées au plateau de réaction 2, par exemple par l'intermédiaire de rivets.

Le couvercle 4 comporte une partie avant 9 s'étendant radialement et une partie cylindrique 10 s'étendant vers l'arrière, située en périphérie radialement externe. L'extrémité arrière de la partie cylindrique comporte des brides 11 ou des pattes radiales qui sont fixées au plateau de réaction 2, par exemple par l'intermédiaire de rivets.

Le dispositif d'embrayage 1 comporte en outre un plateau de pression annulaire 12 et un disque de friction 13 monté axialement entre le plateau de réaction 2 et le plateau de pression 12, dans le volume interne 5.

Le plateau de pression 12 est mobile en translation par rapport au plateau de réaction 2, entre une position embrayée et une position débrayée, dans lesquelles il serre le disque de friction 13 sur le plateau de réaction 2, ou respectivement libère le disque de friction 13.

Le plateau de pression 12 est couplé en rotation au plateau de réaction 2 par l'intermédiaire de languettes élastiques 14 exerçant un effort de rappel tendant à rappeler le plateau de pression 12 vers la position débrayée.

Le déplacement du plateau de pression 12 est actionné par un diaphragme 15, logé dans le volume interne 5, se présentant sous la forme d'une tôle annulaire élastique prenant appui sur le couvercle 4 au niveau d'une zone d'appui 16, le diaphragme 15 basculant autour de cette zone d'appui 16. La zone d'appui 16 est formée par une partie en saillie ménagée sur la partir radiale 9 du couvercle 4. Le diaphragme 15 prend également appui sur le plateau de pression 12, au niveau d'une zone d'appui 17, située radialement à l'intérieur de la zone d'appui 16 du diaphragme 15 sur le couvercle 4.

La commande de l'embrayage se fait classiquement au moyen d'une butée d'embrayage d'un actionneur (non représenté), coopérant avec la périphérie radialement interne du diaphragme 15. Le diaphragme 15 forme un levier transmettant la force appliquée par la butée d'embrayage au plateau de pression 12.

Le dispositif d'embrayage 1 est du type normalement ouvert. La position de repos du diaphragme 15 correspond donc à un état débrayé du dispositif d'embrayage 1. Le diaphragme 15 présente de préférence une portion du type rondelle de Belleville permettant de rappeler le diaphragme vers sa position de repos.

Le disque de friction 13 comporte un support annulaire 18. Des garnitures de friction 19 sont fixées de part et d'autre de la périphérie radialement externe du support 18.

Des moyens d'amortissement 20 sont montés entre le support 18 et un moyeu central 21. Le moyeu central 21 comporte des cannelures internes 22, coopérant avec des cannelures externes d'un arbre d'entrée 23 d'une boîte de vitesses du véhicule.

Les moyens d'amortissement 20 comportent un voile annulaire 24 dont la périphérie radialement interne est fixée au moyeu 21, par exemple par soudage, rivetage ou vissage. Les moyens d'amortissement 20 comportent en outre deux rondelles de guidage 25, 26, situées de part et d'autre du voile annulaire 24. Les deux rondelles de guidage 25, 26 sont fixées l'une à l'autre à leur périphérie radialement externe. La périphérie radialement interne du support 18 du disque de friction 13 est fixée à la rondelle de guidage avant 25.

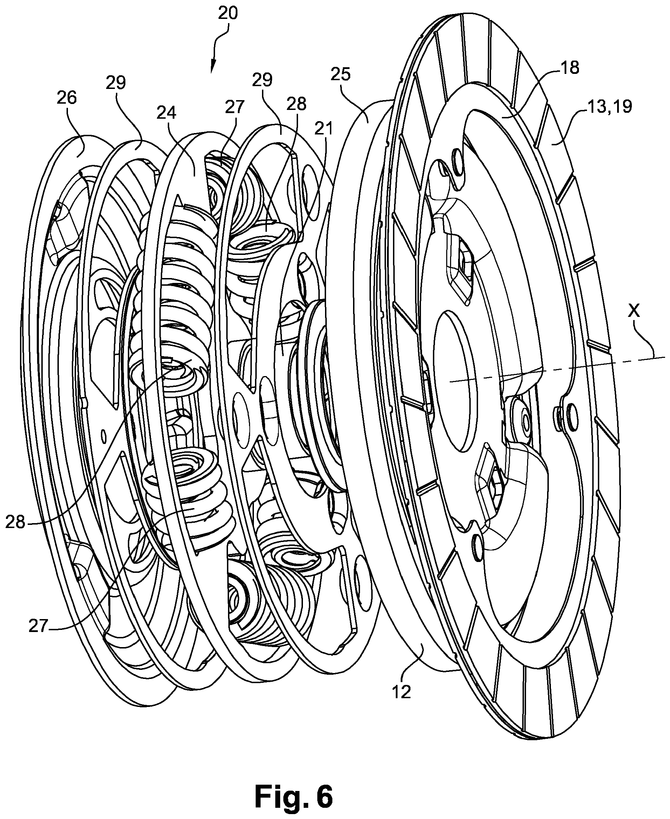

Comme cela est mieux visible à la figure 6, des premiers et seconds organes élastiques 27, 28, tels par exemple que des ressorts de compression hélicoïdaux, sont montés en série entre les rondelles de guidage 25, 26 et le voile annulaire 24, par l'intermédiaire d'un organe de phasage 29 de façon à ce que les organes élastiques 27, 28 se déforment en phase les uns avec les autres.

Plus particulièrement, les organes élastiques 27, 28 sont montés dans des fenêtres du voile annulaire 24 et des rondelles de guidage 25, 26, comme cela est connu en soi. L'organe de phasage 29 est formé de deux tôles, montées de part et d'autre du voile annulaire 24 et fixées l'une à l'autre. L'organe de phasage 29 comporte également des fenêtres servant au logement des organes élastiques 27, 28.

Les organes élastiques 27, 28 peuvent être associés à des moyens de friction permettant de dissiper l'énergie par frottement. En variante, aucun moyen de friction supplémentaire ne peut être ajouté, l'énergie étant alors dissipée en grande partie par le frottement des organes élastiques 27, 28.

De tels moyens d'amortissement 20 s'opposent à la rotation du disque de friction 13 par rapport à l'arbre d'entrée 23 de la boîte de vitesses.

Ces moyens d'amortissement 20 présentent une structure de type LTD (acronyme de Long Travel Damper), permettant un débattement angulaire important entre le disque de friction 13 et l'arbre d'entrée 23 de la boîte de vitesses, de façon à obtenir une filtration efficace des vibrations et des acyclismes de rotation.

Les moyens d'amortissement 20 comportent également un support annulaire 30 dont la périphérie radialement interne est fixée à la rondelle de guidage arrière 26, et dont la périphérie radialement externe supporte des masses pendulaires 31.

Les masses pendulaires 31 sont montées de façon mobile sur le support 30 par l'intermédiaire d'entretoises 32 et de rouleaux 33, comme cela est connu en soi, ces masses 31 étant destinées à améliorer encore la filtration des vibrations et des acyclismes de rotation.

Une tôle flexible 34 permet de coupler un vilebrequin 35 au volant 3. Plus particulièrement, la tôle flexible 34 comporte une partie annulaire radialement interne 36 à partir de laquelle des pattes flexibles 37, ici au nombre de trois, s'étendent radialement vers l'extérieur. Les pattes 37 sont régulièrement réparties sur la circonférence. Les extrémités libres des pattes 37 comportent des zones obliques planes 38, formant un angle compris entre 0° et 90°, par rapport au plan radial, par exemple un angle de l'ordre de 20°. Les pattes 37 sont déformables élastiquement dans la direction axiale X.

Des rondelles d'appui 39, 40 sont disposées de part et d'autre de la périphérie interne 36 de la tôle flexible 34. Des vis 41 permettent de fixer la périphérie interne 36 de la tôle flexible 34 sur le vilebrequin 35. Une première rondelle d'appui 39 est intercalée axialement entre les têtes 42 des vis 41 et la périphérie interne 36 de la tôle flexible 34, une seconde rondelle d'appui 40 étant intercalée axialement entre la périphérie interne 36 de la tôle flexible 34 et le vilebrequin 35.

Les extrémités libres obliques 38 des pattes 37 sont fixées en périphérie externe du volant 3 par l'intermédiaire de moyens de fixation amovibles, tels par exemple que des vis 43. En particulier, des zones planes 44 sont ménagées au niveau de la liaison entre la partie radiale 6 et la partie cylindrique 7 du volant 3, les extrémités obliques 38 des pattes 37 venant en appui sur lesdites zones planes 44.

La tôle flexible 34 permet ainsi de coupler en rotation le vilebrequin 35 et le volant 3, tout en évitant de reprendre les efforts axiaux F (figure 1) exercés par la butée d'embrayage et de transmettre ces efforts F au vilebrequin 35. On évite ainsi d'endommager les paliers associés du moteur. Par ailleurs, la tôle flexible 34 permet de compenser d'éventuels défauts de positionnement axiaux entre le vilebrequin 35 et l'arbre d'entrée 23 de la boîte de vitesses, ou encore de compenser des tolérances dimensionnelles des différentes pièces, dans la direction axiale X. Par ailleurs, les zones de fixation obliques 38, en combinaison avec l'élasticité axiale des pattes 37, permettent de compenser aisément d'éventuels défauts de coaxialité ou de positionnement radiaux entre l'axe du vilebrequin 35 et l'axe du dispositif d'embrayage 1.

La tôle flexible 34 peut être facilement assemblée ou démontée du volant 3, de façon à pouvoir coupler ou démonter aisément le dispositif d'embrayage 1 et le vilebrequin 35.

Comme cela est visible à la figure 1, le dispositif d'embrayage 1 comporte en outre un roulement à billes 45 monté entre le volant 3 et l'arbre d'entrée 23 de la boîte de vitesses. Le roulement 45 comporte une bague externe 46 montée à l'intérieur d'un rebord cylindrique 47 située en périphérie radialement interne du volant 3, une bague interne 48 destinée à être montée autour de l'arbre d'entrée 23 de la boîte de vitesses, et des moyens de roulements 49, tels par exemple que des billes, montées entre les bagues interne 46 et externe 48.

La bague interne 48 du roulement 45 est immobilisée axialement dans les deux sens entre un épaulement 50 formant un appui à l'avant pour la bague interne 48 dans un premier sens et un anneau élastique 51 de type circlip formant un appui à l'arrière pour la bague interne 48 dans un second sens, opposé au premier sens. L'anneau élastique 51 est monté de façon amovible dans une gorge de l'arbre d'entrée 23 de la boîte de vitesses.

La bague externe 46 du roulement 45 prend appui axialement dans le premier sens sur un épaulement 52 ménagé sur le rebord 47 de la périphérie interne du volant 3, c'est-à-dire dans le sens correspondant à celui des efforts axiaux F exercés par la butée d'embrayage sur le diaphragme 15.

Un tel palier 45 permet de guider en rotation le volant 3 autour de l'arbre d'entrée 23 de la boîte de vitesses, tout en permettant la reprise des efforts F exercés par la butée d'embrayage sur l'arbre d'entrée 23 de la boîte de vitesses.

Le dispositif d'embrayage 1 peut être monté entre le vilebrequin 32 et l'arbre d'entrée 23 de la boîte de vitesses en réalisant les étapes suivantes :
- monter le sous-ensemble formé par le plateau de réaction 2, le plateau de pression 12, le disque de friction 13, le diaphragme 15, les moyens d'amortissement 20, le couvercle 4, le volant 3 et/ou le palier 45 , autour de l'arbre d'entrée 23 de la boîte de vitesses, le palier 45 étant monté entre la périphérie radialement interne du volant 3 et l'arbre d'entrée 23 de la boîte de vitesses,
- monter le circlip 51 dans la gorge de l'arbre d'entrée 23 de la boîte de vitesses, de façon à immobiliser axialement la bague interne 48 par rapport à l'arbre d'entrée 23 de la boîte de vitesses,
- fixer la tôle élastique 34 au vilebrequin 35, à l'aide des vis 41, et au volant 3, à l'aide des vis 43.

## Revendications

1. Dispositif d'embrayage (1) pour un véhicule automobile, comportant un plateau de réaction (2) destiné à être couplé en rotation à un vilebrequin (35), un disque de friction (13) destiné à être couplé à un arbre d'entrée (23) d'une boîte de vitesses, un plateau de pression (12) actionné par un diaphragme (15), de façon à serrer ou libérer le disque de friction (13) sur le plateau de réaction (2), des moyens d'amortissement (20) montés entre le disque de friction (13) et l'arbre d'entrée (23) de la boîte de vitesses, les moyens d'amortissement (20) agissant à l'encontre de la rotation du disque de friction (13) par rapport à l'arbre d'entrée (23) de la boîte de vitesses, le dispositif d'embrayage (1) comportant des moyens (34) de couplage en rotation, aptes à coupler en rotation le plateau de réaction (2) ou une partie (3) fixe par rapport au plateau de réaction (2), d'une part, et le vilebrequin (35), d'autre part,
**caractérisé en ce que** lesdits moyens (34) de couplage en rotation étant élastiquement déformables suivant l'axe (X) du dispositif d'embrayage (1), et **en ce qu'**il comporte un palier (45) destiné à être monté entre le plateau de réaction (2) ou la partie (3) fixe par rapport audit plateau de réaction (2), d'une part, et l'arbre d'entrée (23) de la boîte de vitesses, d'autre part, ledit palier (45) étant apte à former un appui axial du plateau de réaction (2) ou de la partie (3) fixe par rapport audit plateau de réaction (2), d'une part, sur l'arbre d'entrée (23) de la boîte de vitesses, d'autre part, les moyens de couplage en rotation comportant une tôle flexible (34) apte à être déformée élastiquement dans la direction axiale (X), le dispositif comportant en outre un volant annulaire (3) fixé au plateau de réaction (2), la tôle flexible (34) étant fixée en périphérie radialement externe dudit volant (3), le palier (45) étant monté au niveau de l'extrémité radialement interne du volant (3).

2. Dispositif d'embrayage (1) selon la revendication 1, **caractérisé en ce que** la tôle flexible (34) comporte une zone de fixation oblique (38) par rapport à la direction radiale et par rapport à la direction axiale (X), fixée sur une zone de fixation (44) de forme complémentaire du volant annulaire (3).

3. Dispositif d'embrayage (1) selon l'une des revendications 1 à 2, **caractérisé en ce que** la tôle flexible (34) comporte une partie annulaire radialement interne (36), destinée à être fixée au vilebrequin (35), et au moins une patte (37) s'étendant radialement vers l'extérieur depuis la partie annulaire interne (36), ladite patte (37) étant déformable élastiquement dans la direction axiale (X), l'extrémité radialement externe de ladite patte (37) étant fixée au plateau de réaction (2) ou à la partie (3) fixe par rapport au plateau de réaction (2), par exemple au volant annulaire (3).

4. Dispositif d'embrayage (1) selon l'une des revendications 1 à 3, **caractérisé en ce que** le palier est un palier à roulement, tel par exemple qu'un roulement à billes (45), comportant une bague externe (46) montée sur le plateau de pression (2) ou sur l'élément (3) fixe par rapport au plateau de pression (2), une bague interne (48) destinée à être montée sur l'arbre d'entrée (23) de la boîte de vitesses, et des moyens de roulements, tels par exemple que des billes (49), montées entre les bagues interne (48) et externe (46).

5. Dispositif d'embrayage (1) selon l'une des revendications 1 à 4, **caractérisé en ce que** les moyens d'amortissement (20) comportent au moins une rondelle de guidage (25, 26) couplée en rotation au disque de friction (13), un voile annulaire (24) destiné à être couplé en rotation à l'arbre d'entrée (23) de la boîte de vitesses, et au moins deux organes élastiques (27, 28) montés entre la rondelle de guidage (25, 26) et le voile annulaire (24) et agissant à l'encontre de la rotation de la rondelle de guidage (25, 26) par rapport au voile annulaire (24), les organes élastiques (27, 28) étant agencés en série par l'intermédiaire d'un organe de phasage (29) de façon à ce que les organes élastiques (27, 28) se déforment en phase les uns avec les autres.

6. Dispositif d'embrayage (1) selon la revendication précédente, **caractérisé en ce que** les moyens d'amortissement (20) comportent au moins un support (30) disposé en amont, en aval ou entre les organes élastiques (27,28), au moins une masse pendulaire (31) étant montée de façon mobile sur le support (30).

7. Dispositif d'embrayage (1) selon l'une des revendications 1 à 5, **caractérisé en ce que** les moyens d'amortissement (20) comportent au moins un support (30) lié en rotation au disque de friction (13), au moins une masse pendulaire (31) étant montée de façon mobile sur le support (30).

8. Dispositif d'embrayage (1) selon l'une des revendications 1 à 7, **caractérisé en ce qu'**il comporte un couvercle (4) fixé au plateau de réaction (2), ledit couvercle (4) logeant, au moins en partie, le plateau de pression (12), le diaphragme (15) et le disque de friction (13), le diaphragme (15) étant monté basculant sur le couvercle (4).

9. Ensemble comportant un dispositif d'embrayage (1) selon la revendication 4, et un arbre d'entrée (23) d'une boîte de vitesses, la bague interne (48) du palier à roulement (45) étant immobilisée axialement dans les deux sens entre un épaulement (50) formant un appui pour la bague interne (48) dans un premier sens et un anneau élastique (51) de type circlip formant un appui pour la bague interne (48) dans un second sens, opposé au premier sens, l'anneau élastique (51) étant monté dans une gorge de l'arbre d'entrée (23) de la boîte de vitesses, la bague externe (46) du palier à roulement (45) prenant appui (52) axialement dans au moins un sens sur le plateau de réaction (2) ou sur la partie (3) fixe par rapport au plateau de réaction (2).

## Patentansprüche

1. Kupplungsvorrichtung (1) für ein Kraftfahrzeug, die eine Reaktionsplatte (2), die dazu bestimmt ist, in Drehung mit einer Kurbelwelle (35) gekoppelt zu werden, eine Reibscheibe (13), die dazu bestimmt ist, mit einer Antriebswelle (23) eines Schaltgetriebes gekoppelt zu werden, eine von einer Membran (15) betätigte Druckplatte (12), um die Reibscheibe (13) auf der Reaktionsplatte (2) festzuklemmen oder freizugeben, und Dämpfungseinrichtungen (20) aufweist, die zwischen die Reibscheibe (13) und die Antriebswelle (23) des Schaltgetriebes montiert sind, wobei die Dämpfungseinrichtungen (20) gegen die Drehung der Reibscheibe (13) bezüglich der Antriebswelle (23) des Schaltgetriebes wirken, wobei die Kupplungsvorrichtung (1) Drehkopplungseinrichtungen (34) aufweist, die die Reaktionsplatte (2) oder einen bezüglich der Reaktionsplatte (2) ortsfesten Teil (3) einerseits und die Kurbelwelle (35) andererseits in Drehung koppeln können,
**dadurch gekennzeichnet, dass** die Drehkopplungseinrichtungen (34) gemäß der Achse (X) der Kupplungsvorrichtung (1) elastisch verformbar sind, und dass sie ein Lager (45) aufweist, das dazu bestimmt ist, zwischen der Reaktionsplatte (2) oder dem bezüglich der Reaktionsplatte (2) ortsfesten Teil (3) einerseits und der Antriebswelle (23) des Schaltgetriebes andererseits montiert zu werden, wobei das Lager (45) eine axiale Auflage der Reaktionsplatte (2) oder des bezüglich der Reaktionsplatte (2) ortsfesten Teils (3) einerseits auf der Antriebswelle (23) des Schaltgetriebes andererseits bilden kann, wobei die Drehkopplungseinrichtungen ein flexibles Blech (34) aufweisen, das in der axialen Richtung (X) elastisch verformt werden kann, wobei die Vorrichtung außerdem ein an der Reaktionsplatte (2) befestigtes ringförmiges Schwungrad (3) aufweist, wobei das flexible Blech (34) am radial äußeren Umfang des Schwungrads (3) befestigt ist, wobei das Lager (45) im Bereich des radial inneren Endes des Schwungrads (3) montiert ist.

2. Kupplungsvorrichtung (1) nach Anspruch 1, **dadurch gekennzeichnet, dass** das flexible Blech (34) einen schrägen Befestigungsbereich (38) bezüglich der radialen Richtung und bezüglich der axialen Richtung (X) aufweist, der an einem Befestigungsbereich (44) komplementärer Form des ringförmigen Schwungrads (3) befestigt ist.

3. Kupplungsvorrichtung (1) nach einem der Ansprüche 1 bis 2, **dadurch gekennzeichnet, dass** das flexible Blech (34) einen radial inneren ringförmigen Teil (36), der dazu bestimmt ist, an der Kurbelwelle (35) befestigt zu werden, und mindestens eine Lasche (37) aufweist, die sich ausgehend vom inneren ringförmigen Teil (36) radial nach außen erstreckt, wobei die Lasche (37) in der axialen Richtung (X) elastisch verformbar ist, wobei das radial äußere Ende der Lasche (37) an der Reaktionsplatte (2) oder am bezüglich der Reaktionsplatte (2) ortsfesten Teil (3) befestigt ist, zum Beispiel am ringförmigen Schwungrad (3).

4. Kupplungsvorrichtung (1) nach einem der Ansprüche 1 bis 3, **dadurch gekennzeichnet, dass** das Lager ein Wälzlager ist, wie zum Beispiel ein Kugellager (45), das einen äußeren Ring (46), der auf die Druckplatte (2) oder auf das bezüglich der Druckplatte (2) ortsfeste Element (3) montiert ist, einen inneren Ring (48), der dazu bestimmt ist, auf die Antriebswelle (23) des Schaltgetriebes montiert zu werden, und Wälzkörpereinrichtungen aufweist, wie zum Beispiel Kugeln (49), die zwischen den inneren (48) und den äußeren Ring (46) montiert sind.

5. Kupplungsvorrichtung (1) nach einem der Ansprüche 1 bis 4, **dadurch gekennzeichnet, dass** die Dämpfungseinrichtungen (20) mindestens eine Führungsscheibe (25, 26), die in Drehung mit der Reibscheibe (13) gekoppelt ist, eine Ringscheibe (24), die dazu bestimmt ist, in Drehung mit der Antriebswelle (23) des Schaltgetriebes gekoppelt zu werden, und mindestens zwei elastische Organe (27, 28) aufweisen, die zwischen die Führungsscheibe (25, 26) und die Ringscheibe (24) montiert sind und gegen die Drehung der Führungsscheibe (25, 26) bezüglich der Ringscheibe (24) wirken, wobei die elastischen Organe (27, 28) in Reihe mittels eines Phaseneinstellorgans (29) angeordnet sind, damit die elastischen Organe (27, 28) sich miteinander in Phase verformen.

6. Kupplungsvorrichtung (1) nach dem vorhergehenden Anspruch, **dadurch gekennzeichnet, dass** die Dämpfungseinrichtungen (20) mindestens einen Träger (30) aufweisen, der stromaufwärts vor, stromabwärts hinter oder zwischen den elastischen Organen (27, 28) angeordnet ist, wobei mindestens eine Pendelmasse (31) beweglich auf den Träger (30) montiert ist.

7. Kupplungsvorrichtung (1) nach einem der Ansprüche 1 bis 5, **dadurch gekennzeichnet, dass** die Dämpfungseinrichtungen (20) mindestens einen Träger (30) aufweisen, der in Drehung mit der Reibscheibe (13) verbunden ist, wobei mindestens eine Pendelmasse (31) beweglich auf den Träger (30) montiert ist.

8. Kupplungsvorrichtung (1) nach einem der Ansprüche 1 bis 7, **dadurch gekennzeichnet, dass** sie einen an der Reaktionsplatte (2) befestigten Deckel (4) aufweist, wobei der Deckel (4) zumindest zum Teil die Druckplatte (12), die Membran (15) und die Reibscheibe (13) aufnimmt, wobei die Membran (15) schwenkbar auf den Deckel (4) montiert ist.

9. Einheit, die eine Kupplungsvorrichtung (1) nach Anspruch 4 und eine Antriebswelle (23) eines Schaltgetriebes aufweist, wobei der innere Ring (48) des Wälzlagers (45) in beiden Richtungen zwischen einer Schulter (50), die eine Auflage für den inneren Ring (48) in einer ersten Richtung bildet, und einem elastischen Ring (51) von der Art Klemmring axial fixiert ist, der eine Auflage für den inneren Ring (48) in einer zweiten Richtung entgegengesetzt zur ersten Richtung bildet, wobei der elastische Ring (51) in eine Rille der Antriebswelle (23) des Schaltgetriebes montiert ist, wobei der äußere Ring (46) des Wälzlagers (45) axial in mindestens einer Richtung auf der Reaktionsplatte (2) oder auf dem bezüglich der Reaktionsplatte (2) ortsfesten Teil (3) aufliegt (52).

## Claims

1. Clutch device (1) for a motor vehicle, comprising a reaction plate (2) intended to be rotationally coupled to a crankshaft (35), a friction disk (13) intended to be coupled to an input shaft (23) of a gearbox, a pressure plate (12) actuated by a diaphragm (15), so as to clamp or release the friction disk (13) against or from the reaction plate (2), damping means (20) mounted between the friction disk (13) and the input shaft (23) of the gearbox, the damping means (20) acting counter to the rotation of the friction disk (13) with respect to the input shaft (23) of the gearbox, the clutch device (1) comprising rotational coupling means (34) able to rotationally couple the reaction plate (2) or a part (3) fixed with respect to the reaction plate (2), on the one hand, and the crankshaft (35), on the other hand, **characterized in that** said rotational coupling means (34) are elastically deformable along the axis (X) of the clutch device (1), and **in that** it comprises a bearing (45) intended to be mounted between the reaction plate (2) or the part (3) fixed with respect to said reaction plate (2), on the one hand, and the input shaft (23) of the gearbox, on the other hand, said bearing (45) being able to form an axial support for the reaction plate (2) or for the part (3) fixed with respect to said reaction plate (2), on the one hand, on the input shaft (23) of the gearbox, on the other hand, the rotational coupling means comprising a flexible metal plate (34) able to be deformed elastically in the axial direction (X), the device further comprising an annular flywheel (3) fastened to the reaction plate (2), the flexible metal plate (34) being fastened at the radially outer periphery of said flywheel (3), the bearing (45) being mounted at the radially inner end of the flywheel (3).

2. Clutch device (1) according to Claim 1, **characterized in that** the flexible metal plate (34) comprises an oblique fastening region (38) with respect to the radial direction and with respect to the axial direction (X), which is fastened to a fastening region (44) of complementary shape of the annular flywheel (3).

3. Clutch device (1) according to either of Claims 1 and 2, **characterized in that** the flexible metal plate (34) comprises a radially inner annular part (36) intended to be fastened to the crankshaft (35), and at least one tab (37) extending radially outward from the inner annular part (36), said tab (37) being elastically deformable in the axial direction (X), the radially outer end of said tab (37) being fastened to the reaction plate (2) or to the part (3) fixed with respect to the reaction plate (2), for example to the annular flywheel (3).

4. Clutch device (1) according to one of Claims 1 to 3, **characterized in that** the bearing is a roller bearing, such as, for example, a ball bearing (45), comprising an outer ring (46) mounted on the pressure plate (2) or on the element (3) fixed with respect to the pressure plate (2), an inner ring (48) intended to be mounted on the input shaft (23) of the gearbox, and rolling means, such as, for example, balls (49), mounted between the inner (48) and outer (46) rings.

5. Clutch device (1) according to one of Claims 1 to 4, **characterized in that** the damping means (20) comprise at least one guide washer (25, 26) rotationally coupled to the friction disk (13), an annular web (24) intended to be rotationally coupled to the input shaft (23) of the gearbox, and at least two elastic members (27, 28) mounted between the guide washer (25, 26) and the annular web (24) and acting counter to the rotation of the guide washer (25, 26) with respect to the annular web (24), the elastic members (27, 28) being arranged in series via a phasing member (29) such that the elastic members (27, 28) deform in phase with one another.

6. Clutch device (1) according to the preceding claim, **characterized in that** the damping means (20) comprise at least one support (30) arranged upstream, downstream or between the elastic members (27, 28), at least one pendular mass (31) being mounted movably on the support (30) .

7. Clutch device (1) according to one of Claims 1 to 5, **characterized in that** the damping means (20) comprise at least one support (30) rotationally connected to the friction disk (13), at least one pendular mass (31) being mounted movably on the support (30).

8. Clutch device (1) according to one of Claims 1 to 7, **characterized in that** it comprises a cover (4) fastened to the reaction plate (2), said cover (4) housing, at least in part, the pressure plate (12), the diaphragm (15) and the friction disk (13), the diaphragm (15) being tiltably mounted on the cover (4).

9. Assembly comprising a clutch device (1) according to Claim 4, and an input shaft (23) of a gearbox, the inner ring (48) of the roller bearing (45) being immobilized axially in both directions between a shoulder (50) forming a bearing point for the inner ring (48) in a first direction and an elastic ring (51) of the circlip type forming a bearing point for the inner ring (48) in a second direction opposite to the first direction, the elastic ring (51) being mounted in a groove of the input shaft (23) of the gearbox, the outer ring (46) of the roller bearing (45) bearing (52) axially in at least one direction on the reaction plate (2) or on the part (3) fixed with respect to the reaction plate (2).
